# EUROPEAN PATENT APPLICATION

(11) **EP 3 255 630 A1**
(43) Date of publication of application: **13.12.2017**
(21) Application number: 16746657.2
(22) Date of filing: 03.02.2016
(51) Int. Cl.: G10K 15/02, G06F 13/00, H04N 21/472, H04R 3/00

(54) **CONTENT PLAYBACK APPARATUS, CONTENT PLAYBACK SYSTEM, CONTENT INFORMATION PROGRAM, AND CONTENT PLAYBACK METHOD**

(30) Priority: 04.02.2015 JP 2015019846
(71) Applicant: Yamaha Corporation, Hamamatsu-shi, Shizuoka 430-8650 (JP)
(72) Inventor: SEKIGUCHI Kohei, Hamamatsu-shi Shizuoka 430-8650 (JP); SUEMITSU Yuki, Hamamatsu-shi Shizuoka 430-8650 (JP); KASHIWAGI Akihito, Hamamatsu-shi Shizuoka 430-8650 (JP); KANADA Masafumi, Hamamatsu-shi Shizuoka 430-8650 (JP); SHIMADA Hideaki, Hamamatsu-shi Shizuoka 430-8650 (JP); MAKINO Yohei, Hamamatsu-shi Shizuoka 430-8650 (JP); SATO Ryota, Hamamatsu-shi Shizuoka 430-8650 (JP)
(74) Representative: Hoffmann Eitle
(86) International application number: PCT/JP2016/053217
(87) International publication number: WO 2016/125826

(57) **Abstract**

A content reproduction apparatus includes: an information receiving unit that receives first information from a first user terminal capable of providing a first content, the first information including information that indicates the first content, the information receiving unit receiving second information from a second user terminal, the second user terminal being different from the first user terminal and being capable of providing a second content, the second information including information that indicates the second content; a list transmission unit that transmits a shared list to the first user terminal, the shared list being created based on the first and second information and including third information indicating the first and second contents; a reproduction request receiving unit that receives, from the first user terminal, a first reproduction request of a first reproduction target content among the first and second contents; and a reproduction unit that acquires the first reproduction target content from a user terminal capable of providing the first reproduction target content among the first and second user terminals, the reproduction unit reproducing the acquired content.

## Description

### TECHNICAL FIELD

The present invention relates to a content information program that handles content information that is capable of being provided by a user terminal, and a content reproduction apparatus that reproduces content acquired from the user terminal.

Priority is claimed on Japanese Patent Application No. 2015-019846, filed February 4, 2015, the contents of which are incorporated herein by reference.

### BACKGROUND ART

Patent Document 1 discloses a system related to a content information program that handles content information held by a user terminal, and a content reproduction apparatus that reproduces content acquired from a user terminal. That is to say, Patent Document 1 discloses a content reproduction system including three source devices (user terminals) that store audio data as content, and a sync device (content reproduction apparatus) that reproduces audio data acquired from each source device.

More specifically, in the content reproduction system disclosed in Patent Document 1, the content information program executed by a user terminal transmits to the content reproduction apparatus, a reproduction request of the content possessed by the own terminal. Upon receiving a reproduction request from each user terminal, the content reproduction apparatus creates and updates a reproduction list including each content name indicated in each reproduction request. The content reproduction apparatus reproduces the content according to the reproduction list. As a result, the user of each user terminal can view and listen to the content in a shared manner.

### [Prior Art Documents]

### [Patent Documents]

[Patent Document 1] PCT International Publication No. WO/2012/117452

### SUMMARY OF THE INVENTION

### Problem to be Solved by the Invention

However, in the content reproduction system disclosed in Patent Document 1, the content information program executed by a user terminal transmits only the reproduction request of the content possessed by the user terminal. Therefore, it is impossible to cause the content reproduction apparatus to reproduce the content possessed by another user terminal.

An example of an object of the present invention is provide a content information program of a user terminal capable of causing a content reproduction apparatus to reproduce content that is capable of being provided by another user terminal, a content reproduction apparatus thereof, a content reproduction system including the content reproduction apparatus; and a content reproduction method.

### Means for Solving the Problem

A content reproduction apparatus according to an aspect of the present invention includes: an information receiving unit that receives first information from a first user terminal capable of providing a first content, the first information including information that indicates the first content, the information receiving unit receiving second information from a second user terminal, the second user terminal being different from the first user terminal and being capable of providing a second content, the second information including information that indicates the second content; a list transmission unit that transmits a shared list to the first user terminal, the shared list being created based on the first and second information and including third information indicating the first and second contents; a reproduction request receiving unit that receives, from the first user terminal, a first reproduction request of a first reproduction target content among the first and second contents; and a reproduction unit that acquires the first reproduction target content from a user terminal capable of providing the first reproduction target content among the first and second user terminals, the reproduction unit reproducing the acquired content.

A content reproduction system according to an aspect of the present invention includes: first and second user terminals different from each other; and a content reproduction apparatus. The first user terminal includes: a first information transmission unit that transmits first information to the content reproduction apparatus, the first information including information indicating a first content, the first content being capable of being provided by the first user terminal; a first list receiving unit that receives a shared list from the content reproduction apparatus, the shared list being created based on the first information and second information, the second information including information indicating a second content, the second content being capable of being provided by the second user terminal, the shared list including third information indicating the first and second contents; a first reproduction request receiving unit that accepts an operation of selecting a first reproduction target content from the first and second contents; and a first reproduction request transmission unit that transmits, to the content reproduction apparatus, a first reproduction request of the first reproduction target content. The second user terminal includes: a second information transmission unit that transmits the second information to the content reproduction apparatus. The content reproduction apparatus includes: an information receiving unit that receives the first information from the first user terminal, and receives the second information from the second user terminal; a list transmission unit that transmits the shared list to the first user terminal; a reproduction request receiving unit that receives the first reproduction request from the first user terminal; and a reproduction unit that acquires the first reproduction target content from a user terminal capable of providing the first reproduction target content among the first and second user terminals, the reproduction unit reproducing the acquired content.

A content information program according to an aspect of the present invention causes a first user terminal to execute: transmitting first information to a content reproduction apparatus, the first information including information that indicates a first content, the first content being capable of being provided by the first user terminal; receiving a shared list from the content reproduction apparatus, the shared list including third information indicating the first and second contents, the shared list being created based on the first information and second information, the second information including information that indicates a second content, the second content being capable of being provided by a second user terminal different from the first user terminal, the shared list including third information including the first and second contents; accepting an operation of selecting a reproduction target content from the first and second contents; and transmitting, to the content reproduction apparatus, a reproduction request of the reproduction target content.

A content reproduction method according to an aspect of the present invention includes: receiving first information from a first user terminal capable of providing a first content, the first information including information that indicates the first content; receiving second information from a second user terminal, the second user terminal being different from the first user terminal and being capable of providing a second content, the second information including information that indicates the second content; transmitting a shared list to the first user terminal, the shared list being created based on the first and second information and including third information indicating the first and second contents; receiving, from the first user terminal, a reproduction request of a reproduction target content among the first and second contents; acquiring the reproduction target content from a user terminal capable of providing the reproduction target content among the first and second user terminals; and reproducing the acquired content.

### Effect of the Invention

According to the present invention, it is possible to cause a content reproduction apparatus to reproduce content that is capable of being provided by another user terminal.

### BRIEF DESCRIPTION OF THE DRAWINGS

FIG. 1 is a diagram for describing a brief overview of a content reproduction system according to an embodiment of the present invention.
FIG. 2A is a hardware block diagram showing a part of a configuration of a smartphone according to the embodiment of the present invention.
FIG. 2B is a hardware block diagram showing a part of a configuration of an AV receiver according to the embodiment of the present invention.
FIG. 3 is a flowchart showing operations of each smartphone and the AV receiver in the content reproduction system shown in FIG. 1.
FIG. 4A is a schematic plan view installation diagram of the content reproduction system, for describing an example of a connection establishing process in the embodiment of the present invention.
FIG. 4B is a flowchart showing each operation of the smartphone and the AV receiver, for describing an example of a connection establishing process in the embodiment of the present invention.
FIG. 5 is a flowchart showing each operation of each smartphone and the AV receiver, for describing an example of a shared list creation process in the embodiment of the present invention.
FIG. 6 is a diagram showing an example of a display of a smartphone at the time of creating a public list.
FIG. 7A is a diagram showing an example of a public list in the embodiment of the present invention.
FIG. 7B is a diagram showing another example of a public list in the embodiment of the present invention.
FIG. 7C is a diagram showing an example of a shared list in the embodiment of the present invention.
FIG. 7D is a diagram showing an example of a reproduction list in the embodiment of the present invention.
FIG. 8 is a diagram showing an example of a display of a smartphone at the time of selecting music data to be reproduced, in the embodiment of the present invention.
FIG. 9 is a diagram showing a modified example of a shared list in the embodiment of the present invention.

### EMBODIMENTS FOR CARRYING OUT THE INVENTION

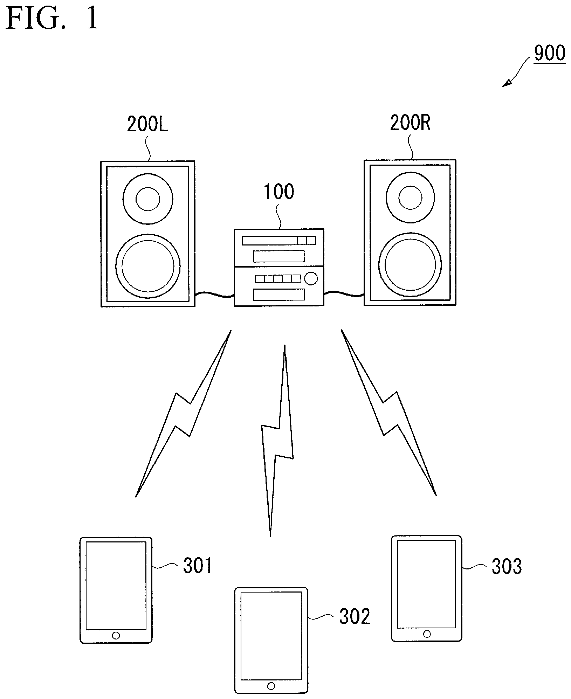

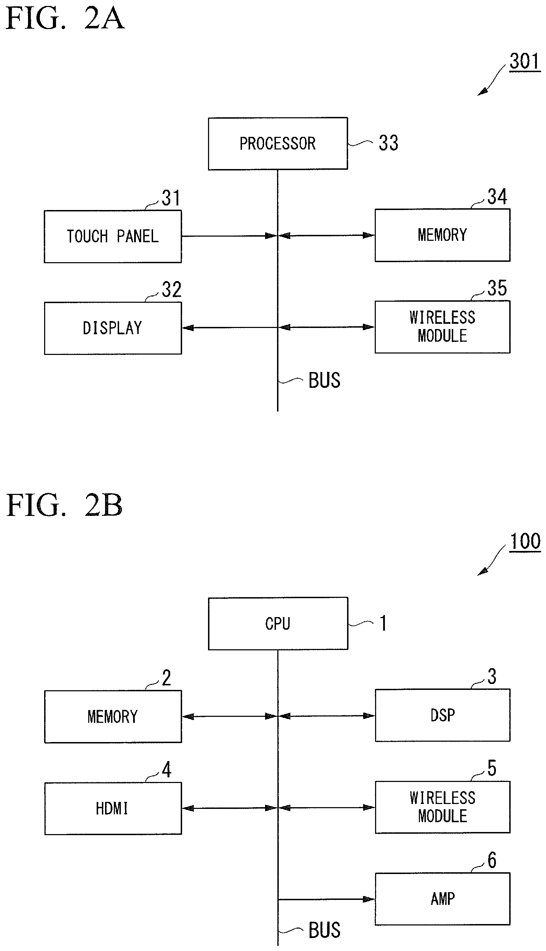

A content reproduction system 900 according to a first embodiment is described, with reference to FIG. 1, FIG. 2A, and FIG. 2B. FIG. 1 is a diagram for describing a brief overview of the content reproduction system 900. FIG. 2A is a hardware block diagram showing a part of a configuration of a smartphone 301. FIG. 2B is a hardware block diagram showing a part of a configuration of an AV (audio visual) receiver 100.

As shown in FIG. 1, the content reproduction system 900 includes an AV receiver 100, two loudspeakers, namely, loudspeaker 200L and loudspeaker 200R, and three smartphones, namely, smartphone 301, smartphone 302, and smartphone 303. The AV receiver 100 is connected with the smartphone 301, the smartphone 302, and the smartphone 303 by means of the Bluetooth (registered trademark) standard for example. Connection between the AV receiver 100, and the smartphone 301, the smartphone 302, and the smartphone 303 may be performed by means of another standard (such as Wi-Fi (registered trademark)). Connection between the AV receiver 100, and the smartphone 301, the smartphone 302, and the smartphone 303 is not be limited to wireless communication, and may be made in a wired connection manner using wired LAN or the like.

The AV receiver 100 corresponds to a content reproduction apparatus. The smartphone 301, the smartphone 302, and the smartphone 303 correspond to user terminals. The content reproduction apparatus may also be an audio player, a headphone-type player, or the like. The user terminal may be a tablet-type terminal, a personal computer, a music terminal, a wearable terminal, or the like, which do not have a telephone function. Hereunder, the smartphone 301, the smartphone 302, and the smartphone 303 may be abbreviated as smartphones 301 to 303 in some cases.

In the content reproduction system 900, each of the smartphones 301 to 303 is capable of providing (possesses) contents. Each of the smartphones 301 to 303 transmits to the AV receiver 100, a reproduction request for causing the AV receiver 100 to reproduce content. Upon receiving the reproduction request, the AV receiver 100 receives the content indicated in the reproduction request from any one of the smartphones 301 to 303, and causes the loudspeaker 200L and the loudspeaker 200R to reproduce the content at the same time.

In the content reproduction system 900 according to the present embodiment, the smartphone 301 can cause the AV receiver 100 to reproduce not only content that is capable of being provided by (that is possessed by) the terminal itself (smartphone 301) but also content that is capable of being provided by (that are possessed by) other terminals (the smartphone 302 and the smartphone 303) that differ from the terminal itself. Similarly, the smartphone 302 and the smartphone 303 can each cause the AV receiver 100 to reproduce content that is capable of being provided by another terminal.

Hereunder, in the present embodiment, a case where the content is music data is described. However, the content may also be video data.

Next, a configuration of the content reproduction system 900 is described. As shown in FIG. 2A, the smartphone 301 includes a touch panel 31, a display 32, a processor 33, a memory 34, and a wireless module 35. Each of the configurations is connected to a common BUS.

An information transmission unit, a list receiving unit, a reproduction request accepting unit, a reproduction request transmission unit, a permission accepting unit, an authentication information receiving unit, a connection request transmission unit, a connection establishing unit, and a display unit of the user terminal may each correspond to at least one of these configurations of the smartphone 301 (the same applies to the smartphone 302 and the smartphone 303). For example, the information transmission unit, the list receiving unit, the reproduction request transmission unit, the authentication information receiving unit, the connection request transmission unit, and the connection establishing unit may each correspond to the processor 33 and the wireless module 35. The reproduction request accepting unit and the permission accepting unit may each correspond to the processor 33 and the touch panel 31. The display unit may correspond to the display 32.

The processor 33 of the smartphone 301 performs overall control of other respective configurations. The wireless module 35 realizes information transmission and reception by means of the Bluetooth (registered trademark) standard. The touch panel 31 realizes acceptance of operation input from a user. The smartphone 301 realizes a GUI (graphical user interface) by means of the touch panel 31 and the display 32. The memory 34 stores music data as contents. Also, the memory 34 stores a program. The program stored in the memory 34 is executed by the processor 33. By executing this program, there is realized a function of causing the AV receiver 100 to reproduce music data that is capable of being provided by the other terminals (the smartphone 302 and the smartphone 303).

The smartphone 302 and the smartphone 303 each have the same configuration as that of the smartphone 301. That is to say, the smartphone 302 and the smartphone 303 each realize a GUI in a manner similar to that of the smartphone 301. The smartphone 302 and the smartphone 303 store music data in a manner similar to that of the smartphone 301.

As shown in FIG. 2B, the AV receiver 100 includes a CPU (central processing unit) 1, a memory 2, a DSP (digital signal processor) 3, a HDMI (high definition multimedia interface (HDMI is a registered trademark)) 4, a wireless module 5, and an AMP (amplifier) 6. Each of the configurations is connected to a common BUS.

An information receiving unit, a list transmission unit, a reproduction request receiving unit, a reproduction unit, a reproduction list generation unit, an identification unit, a request unit, an authentication information transmission unit, a connection request receiving unit, a connection establishing unit, and a shared list creation unit of the content reproduction apparatus may each correspond to at least one of these configurations of the AV receiver 100. For example, the information receiving unit, the list transmission unit, the reproduction request receiving unit, the request unit, the authentication information transmission unit, the connection request receiving unit, and the connection establishing unit may each correspond to the CPU 1, and the wireless module 5. The reproduction unit may correspond to the DSP 3 and the AMP. The reproduction list generation unit, the identification unit, and the shared list creation unit may each correspond to the CPU 1.

The DSP 3 is a processor for various types of sound processes to be performed on sound data. The HDMI 4 is an interface for transmitting and receiving content data including music data. The wireless module 5 realizes communication by means of the Bluetooth (registered trademark) standard. The AMP 6 is a circuit that amplifies sound signals. Sound signals that have been amplified by the AMP 6 are output to the loudspeaker 200L and the loudspeaker 200R.

The memory 2 stores a program, and public lists that are transmitted from the smartphones 301 to 303. The CPU 1 reads the program from the memory 2, and executes the read program. The respective functions of the AV receiver 100 including a public list combining function are realized by executing the program stored in the memory 2. The public list combining function is described later.

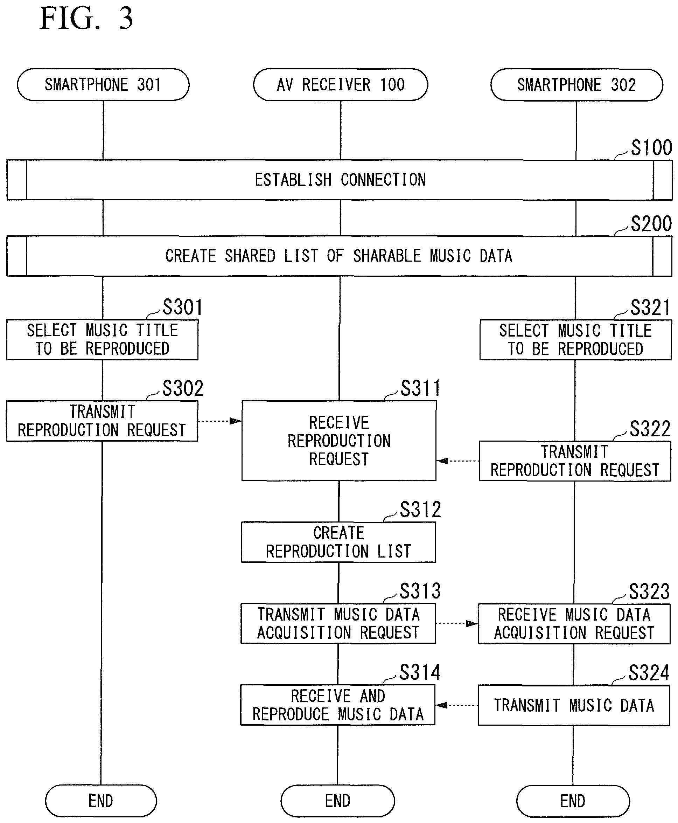

Next, respective operations of the AV receiver 100, the smartphone 301, and the smartphone 302 in the content reproduction system 900 are described, with reference to FIG. 3. FIG. 3 is a flowchart showing the respective operations of the AV receiver 100, the smartphone 301, and the smartphone 302. The dotted arrows in FIG. 3 denote directions of information transmission. Description of the operation of the smartphone 303 is omitted.

First, the smartphone 301, the smartphone 302, and the AV receiver 100 perform a connection establishing process in order to establish connection in a form where the AV receiver 100 serves as a parent unit, and the smartphone 301 and the smartphone 302 serve as child units (Step S100).

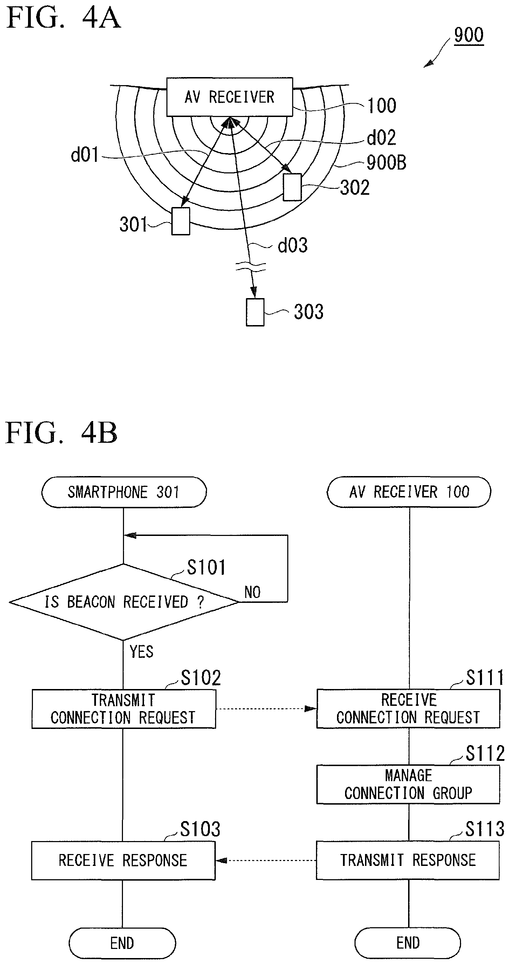

Here is described an example of the connection establishing process, with reference to FIG. 4A and FIG. 4B. FIG. 4A is a schematic plan view installation diagram of the content reproduction system 900, for describing an example of the connection establishing process. FIG. 4B is a flowchart showing each operation of the smartphone 301 and the AV receiver 100, for describing the example of the connection establishing process.

As shown in FIG. 4A, the AV receiver 100 outputs a beacon 900B to the periphery of the device itself (the AV receiver 100) at each predetermined interval (for example, at one second). The beacon 900B is a radio wave that complies with the Bluetooth low energy standard (Bluetooth is a registered trademark) for example. The program of the AV receiver 100 controls the wireless module 5 to thereby realize output of the beacon 900B.

The beacon 900B reaches only within a range of, for example, 10 m from the AV receiver 100. In the example shown in FIG. 4A, the distance d01 between the smartphone 301 and the AV receiver 100 is no more than 10 m. Therefore, the beacon 900B reaches the smartphone 301. Similarly, the beacon 900B reaches the smartphone 302 that is distanced from the AV receiver 100 by the distance d02 (where d02 ≤ 10 m). The beacon 900B does not reach the smartphone 303 that is distanced from the AV receiver 100 by the distance d03 (where d03 > 10 m).

The AV receiver 100 treats each smartphone positioned within the range of reach of the beacon as a smartphone that is positioned in the same space as that of the AV receiver 100. In the example shown in FIG. 4A, the AV receiver 100 treats the smartphone 301 and the smartphone 302 as smartphones that are positioned in the same space as that of the AV receiver 100.

The beacon 900B includes authentication information for each of the smartphones 301 and 302 to connect to the AV receiver 100. For example, the authentication information is a connection ID (identifier). This authentication information is preliminarily stored in the memory 2 of the AV receiver 100.

In the connection establishing process, first, the smartphone 301 determines whether or not the beacon 900B including the authentication information has been received (Step S101). That is to say, the program executed by the processor 33 of the smartphone 301 determines whether or not the beacon 900B has been received, by controlling the wireless module 35. If the beacon 900B has not been received (Step S101: NO), the smartphone 301 waits until receiving the beacon 900B.

If the beacon 900B has been received (Step S101: YES), the smartphone 301 transmits a connection request as a response to the AV receiver 100 (Step S102). Specifically, by controlling the wireless module 35, the program of the smartphone 301 makes a wireless output that includes, in the connection request, the authentication information included in the beacon 900B received in Step S101, and that complies with the Bluetooth low energy standard. The connection request also includes, other than the authentication information, identification information of the smartphone 301 (such as terminal name, network address, and preliminarily set user name).

The smartphone 301 may, before transmitting the connection request, allow the user to select whether or not to transmit the connection request, using the GUI.

Upon receiving the connection request transmitted from the smartphone 301 (Step S111), the AV receiver 100 performs a connection group management process (Step S112). A connection group refers to a group of smartphones that connect to the AV receiver 100. The connection group management process refers to a process of managing information as to whether or not each smartphone is connected to the AV receiver 100.

Specifically, in the example shown in FIG. 4A, the smartphone 301 and the smartphone 302 are able to connect to the AV receiver 100 by means of the Bluetooth low energy standard. Accordingly, the AV receiver 100 adds to information of the connection group, the identification information (such as terminal names) of the smartphone 301 and the smartphone 302 (Step S112).

The AV receiver 100 performs the connection group management process at predetermined time intervals (every 30 seconds for example) to determine whether or not the smartphones indicated in the identification information of the connection group are able to connect thereto. If connection with a smartphone is not possible, the AV receiver 100 deletes the identification information associated with the smartphone from the connection group information.

Next, the AV receiver 100 transmits to the smartphone 301, a response to the connection request (Step S113). The smartphone 301 receives the response (Step S103). This ends the process of establishing connection between the AV receiver 100 and the smartphone 301.

Here is described a case where the authentication information included in the connection request differs from the authentication information stored in the memory 2 of the AV receiver 100. In this case, the program of the AV receiver 100, in Step S112, does not add the transmission source of the connection request to the connection group, and does not perform communication with the transmission source.

Returning to FIG. 3, when the connection establishing process ends (Step SI00), the content reproduction system 900 performs a process of creating a shared list S of sharable contents (Step S200).

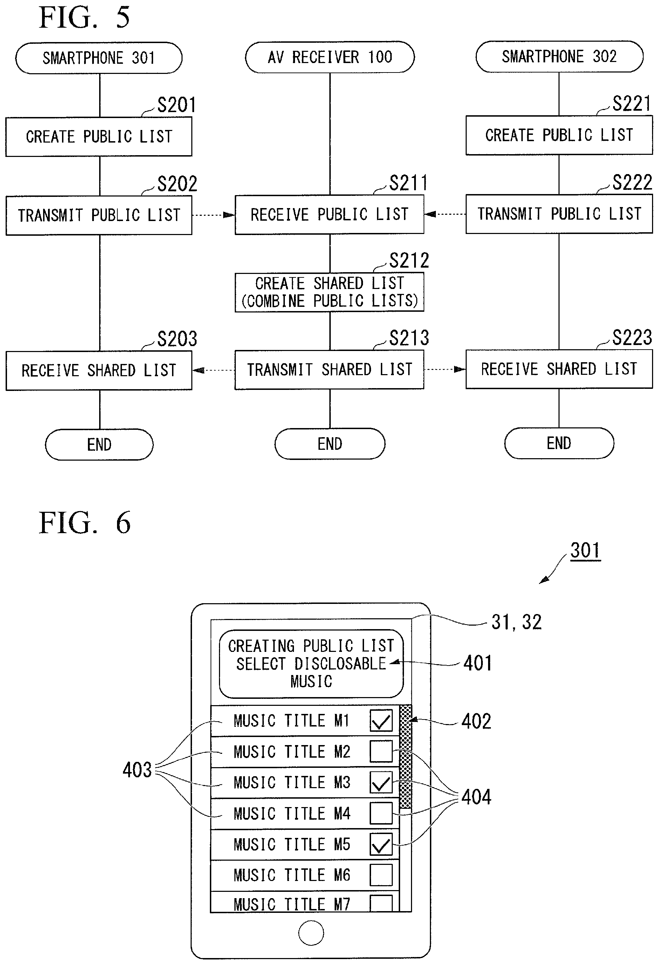

Here is described an example of the process of creating a shared list S, with reference to the flowchart of FIG. 5. The shared list S is a list that is created by combining respective public lists 301L and 302L created by the respective smartphones 301 and 302. The public list 301L (302L) is a list that includes titles of music data that are disclosable to the other smartphone 302 (301), among the titles of music data that is capable of being provided by the smartphone 301 (302). Being disclosable here means being selectable by being displayed on the other terminal. When the user selects a displayed music title, the music data corresponding thereto becomes the target of reproduction. The shared list S is shared among the respective smartphones 301 and 302 so that it can be referred.

As shown in FIG. 5, in the process of creating a shared list S, first, the smartphone 301 creates a public list 301L (Step S201). For example, the program of the smartphone 301 creates, as the public list 301L, a list that includes music titles that are allowed to be displayed on the smartphone 302 (and the smartphone 303), among the music titles of the music data that is capable of being provided by the smartphone 301. Specifically, the memory 34 of the smartphone 301 stores music data, music titles, and sharing information that indicates whether or not the music titles are disclosable to other terminals, while preliminarily associating them with each other. The program of the smartphone 301 makes reference to the memory 34 to identify music titles indicated by the sharing information as being disclosable, and creates the public list 301L that includes the identified music titles. The memory location of the music data that is capable of being provided by the smartphone 301 is not limited to the memory 34, and it may be, for example, a server on the Internet, to which the smartphone 301 connects (the same applies to the smartphone 302).

When creating the public list 301L, the smartphone 301 may allow the user to select music titles that are disclosable to other terminals, using the GUI. For example, as shown in the display example of the smartphone 301 of FIG. 6, in order to create the public list 301L, the program of the smartphone 301 displays, in a display region 401 of the display 32, a message that requests a selection of music titles that are disclosable to other terminals. As shown in FIG. 6, the program of the smartphone 301 displays, within a display region 402, each music title 403 of several music data that is capable of being provided by the smartphone 301, in a manner of being arranged next to a selection box 404. The program of the smartphone 301 adds, in the public list 301L, the music titles 403 that correspond to the selection boxes 404 at the locations of touches accepted by the touch panel 32, and stores the public list 301L in the memory 34.

The embodiment of the present invention is not limited to the above example. For example, the program of the smartphone 301 may display, within the display region 402, artist names, album titles, or music genres of the several music data that is capable of being provided by the smartphone 301, instead of music titles 403, in a manner of being arranged next to the selection boxes 404. In this case, the program of the smartphone 301 may add artist names, album titles, or music genres (or the music titles 403 that correspond to artist names or the like), that correspond to the selection boxes 404 at the locations of touches accepted by the touch panel 32, and store the public list 301L in the memory 34.

In the example shown in FIG. 6, among several music data that is capable of being provided by the smartphone 301, music titles M1 to M7 are being displayed in the display region 402. The user has selected the selection box 404 corresponding to the music title M1, the selection box 404 corresponding to the music title M3, and the selection box 404 corresponding to the music title M5, by means of touch operation. As a result, the public list 301L includes the music title M1, the music title M3, and the music title M5.

As shown in FIG. 5, upon creating the public list 301L (Step S201), the smartphone 301 transmits the created public list 301L to the AV receiver 100 (Step S202). Specifically, the program of the smartphone 301 transmits the public list 301L to the AV receiver 100 by means of communication of the Bluetooth low energy standard, by controlling the wireless module 35.

Similarly, the smartphone 302 also creates a public list 302L that corresponds to music data that is capable of being provided by the device itself (Step S221), and transmits the created public list 302L to the AV receiver 100 (Step S222).

Upon receiving the public lists 301L and 302L from the smartphone 301 and the smartphone 302, the AV receiver 100 creates a shared list S by combining the received public lists 301L and 302L (Step S212).

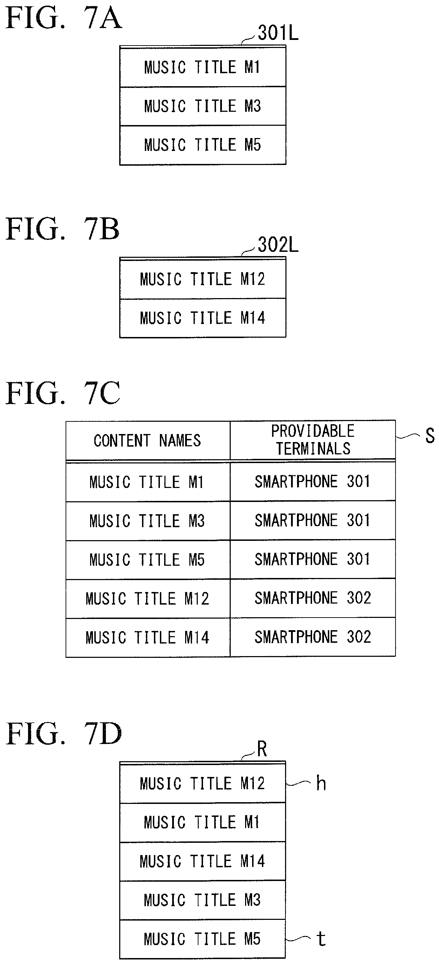

Combining the public lists 301L and 302L performed by the AV receiver 100 is described, with reference to FIG. 7A to FIG. 7D. FIG. 7A is a diagram showing the public list 301L received by the AV receiver 100 from the smartphone 301. FIG. 7B is a diagram showing the public list 302L received by the AV receiver 100 from the smartphone 302. FIG. 7C is a diagram showing the shared list S, and specifically, it is a diagram showing a list after combining the public list 301L and the public list 302L. In the example shown in FIG. 7A to FIG. 7D, in the smartphone 301, the music title M1, the music title M3, and the music title M5 are set as music titles that are disclosable to other terminals, among the music titles of the music data that is capable of being provided by the smartphone 301. Moreover, in the smartphone 302, the music title M12 and the music title M14 are set as music titles that are disclosable to other terminals, among the music titles of the music data that is capable of being provided by the smartphone 302.

As shown in FIG. 7A, the public list 301L includes the music title M1, the music title M3, and the music title M5. As shown in FIG. 7B, the public list 302L includes the music title M12 and the music title M14. As shown in FIG. 7C, the shared list S includes the music titles included in the public list 301L and the public list 302L. That is to say, in the example shown in FIG. 7C, the shared list S includes the music title M1, the music title M3, the music title M5, the music title M12, and the music title M14. In the shared list S shown in FIG. 7C, each music title is associated with providable terminal information (possessing terminal information). The providable terminal information refers to identification information of a terminal (smartphone) capable of providing music data of music titles. In the example shown in FIG. 7C, terminal names are used as providable terminal information.

For example, the AV receiver 100 may associate the music title M1, the music title M3, and the music title M5 with the smartphone 301, using the providable terminal information indicating the smartphone 301 that is included in the public list 301L.

In a case where the music title M1 that is capable of being provided by the smartphone 301 is the same as the music title M12 that is capable of being provided by the smartphone 302, either one of the music title M1 and the music title M12 may be deleted from the public list 301L in order to avoid overlapping.

The shared list S is not limited to the example shown in FIG. 7C. For example, the shared list S may, instead of the providable terminal information or along with the providable terminal information, include the user name of the terminal that is capable of providing the music data.

Upon creating the shared list S by combining the respective received public lists 301L and 302L (Step S212), the AV receiver 100, as shown in FIG. 5, transmits the created shared list S to the smartphone 301 and the smartphone 302 (Step S213). The present embodiment is not limited to this example. The AV receiver 100 may transmit the shared list S only to either one of the smartphone 301 and the smartphone 302. The smartphone 301 and the smartphone 302 receive the shared list S from the AV receiver 100 (Step S203 and Step S223).

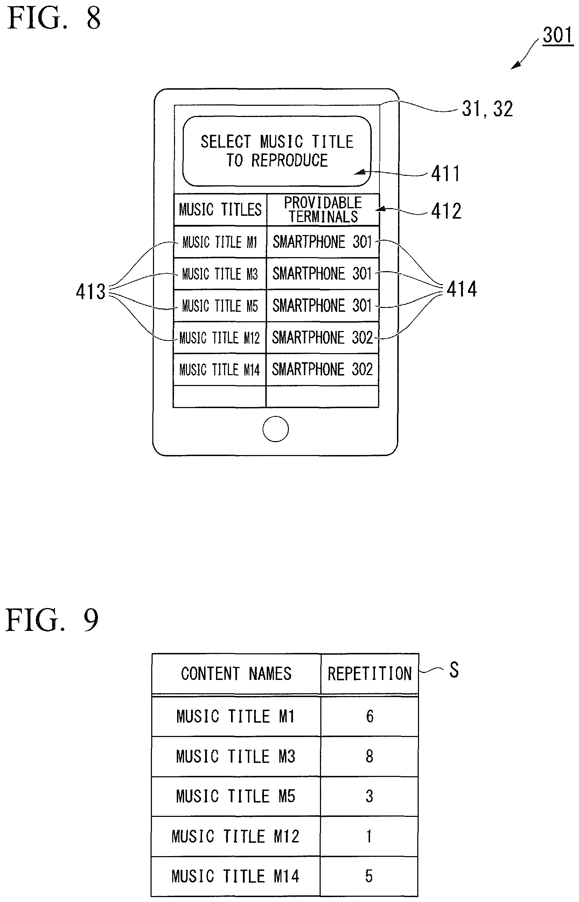

Returning to FIG. 3, when creation of the shared list S is finished (Step S200), the smartphone 301 causes the user to select a music title of music data to be reproduced (Step S301). Specifically, the program of the smartphone 301 uses the GUI to cause the user to select the music title. For example, as shown in the display example of the smartphone 301 of FIG. 8, the program of the smartphone 301 displays in the display region 411 of the display 32, a message that prompts a selection of the reproduction target music title, by controlling the display 32. The program of the smartphone 301 displays in the display region 412, the shared list S shown in FIG. 7C. That is to say, the program of the smartphone 301 displays in the display region 412, a list in which the music titles 413 and the possessing terminal 414 are associated with each other. The user of the smartphone 301 selects a music title 413 displayed in the display region 412. The smartphone 301 may accept an operation of selecting several music titles.

Next, upon having the user select the music title of the music data to be reproduced (Step S301), the smartphone 301 transmits a reproduction request as shown in FIG. 5 (Step S302). More specifically, the program of the smartphone 301 identifies the music title that is displayed at the location of the touch accepted by the touch panel 31. Then, the program of the smartphone 301 transmits the reproduction request including the identified music title to the AV receiver 100, by controlling the wireless module 35.

Similarly, the smartphone 302 accepts an operation of selecting a music title included in the shared list S (Step S321), and transmits a reproduction request that includes the selected music title to the AV receiver 100 (Step S322). In the process example shown in FIG. 3, the smartphone 302 transmits the reproduction request at a timing after the timing of the reproduction request transmission performed by the smartphone 301.

The AV receiver 100 sequentially receives reproduction requests from the smartphone 301 and the smartphone 302 (Step S311). Upon receiving each of the reproduction requests (Step S311), the AV receiver 100 creates a reproduction list R that includes the music titles included in the respective reproduction requests. For example, the AV receiver 100 creates the reproduction list R by arranging the music titles in the respective reproduction requests in the order of receiving the respective reproduction requests. In the example shown in FIG. 3, the reproduction list R shown in FIG. 7D is generated. That is to say, the AV receiver 100 has received a reproduction request including the music title M12, a reproduction request including the music title M1, a reproduction request including the music title M14, a reproduction request including the music title M3, and a reproduction request including the music title M5, in this order. Therefore, the first item h on the reproduction list R is the music title M12, and the last item t on the reproduction list R is the music title M5.

Upon creating the reproduction list R (Step S312), the AV receiver 100 transmits a music data acquisition request (Step S313). In the example shown in FIG. 3, the music title M12, which is the first item on the reproduction list R, is included in the reproduction request transmitted by the smartphone 301. Moreover, the music data of the music title M12 is capable of being provided by the smartphone 302, which differs from the smartphone 301. Therefore, the AV receiver 100 transmits to the smartphone 302, a request to acquire the music data of the music title M12 (Step S313). The AV receiver 100 identifies the smartphone that is capable of providing the music data of the music title M12, by making reference to the shared list S (refer to FIG. 7C).

When the wireless module 35 has received the music data acquisition request (Step S323), the program of the smartphone 302 controls the wireless module 35 to transmit to the AV receiver 100, the music data indicated by the music title that is included in this music data acquisition request (Step S324). The program of the smartphone 302 may perform the process of creating the shared list S (Step S200) and the process of requesting reproduction of other music data (Step S301 and Step S302) while performing transmission of music data (Step S324), by performing multi task operations.

The AV receiver 100 receives the music data from the smartphone 302 and reproduces this music data at the same time (Step S314). That is to say, the AV receiver 100 performs a predetermined sound processing on the received music data by means of the DSP 3, and causes the loudspeaker 200L and the loudspeaker 200R to output a sound signal that is amplified by the AMP 6.

Upon finishing reproduction of the music data of the music title M12, the AV receiver 100 deletes the music title M12 on the top of the reproduction list R, and reproduces the music data of the music title M1, which has now become the first item. Moreover, the AV receiver 100, if it receives a reproduction request while reproducing music data, performs a process of updating the reproduction list R.

In the content reproduction system 900 according to the present embodiment, the program of the smartphone 301 displays on the display 32, the shared list S that includes music titles of the music data that is capable of being provided by the other terminal (smartphone 302), and transmits a reproduction request including the displayed music titles to the AV receiver 100. As a result, it is possible to cause the AV receiver 100 to reproduce music data that is capable of being provided by other terminals.

The operation of selecting a music title of the music data being a reproduction target may be accepted by the AV receiver 100. Specifically, the AV receiver 100 may include a display unit that displays a shared list S, and an accepting unit that accepts the operation of selecting a music title included in the displayed shared list S, and may accept from the user the operation of selecting a music title to be added to the reproduction list R.

In the content reproduction system 900 according to the present embodiment, only the music data of the music titles included in the shared list S becomes the reproduction target. That is to say, only the music data of the music titles included in the public lists of the respective smartphones 301 to 303 becomes the reproduction target. As a result, for example, the user of the smartphone 301 can allow users of the smartphone 302 and the smartphone 303 to select the music data that is desired to be reproduced only in an AV receiver 100 installed environment where the users of the smartphone 302 and the smartphone 303 are present.

In the present embodiment, lists that are provided by the smartphones 301 to 303 are not limited to public lists. For example, the programs of the smartphones 301 to 303 may transmit to the AV receiver 100, lists of music titles of all of the music data that is capable of being provided by the smartphones 301 to 303, and the AV receiver 100 may create a shared list S so as to include the music titles of all of the music data that is capable of being provided by the smartphones 301 to 303.

In the present embodiment, information that is provided by the smartphones 301 to 303 is not limited to lists. For example, the programs of the smartphones 301 to 303 may transmit to the AV receiver 100, information including the information (titles of contents) that indicates all or part of the music data (contents) that is capable of being provided by the smartphones 301 to 303, and the AV receiver 100 may create a shared list S based on the information.

In the content reproduction system 900 according to the present embodiment, by only the smartphone 301 positioning in the receiving range of the beacon output from the AV receiver 100, it is able to establish a connection group without requiring an operation of password input or the like.

That is to say, the smartphone 301 does not require an operation of connection password or the like, and is able to connect to the AV receiver 100 by only responding to a wireless. Similarly, the other smartphones 302 and 303 are also able to connect to the AV receiver 100 by only responding to the received radio waves. As a result, these several smartphones 301 to 303 are each able to establish a connection group that is connected to the AV receiver 100, by just being positioned in the range of radio waves output from the AV receiver 100.

In the example mentioned above, contents are music data. However, the present embodiment is not limited to this type of example. For example, in a case where each of the smartphones 301 to 303 is capable of providing video data as content, the AV receiver 100 outputs video data transmitted from each of the smartphones 301 to 303 to a display device connected to the HDMI 4.

Next, a shared list S according to a modified example is described, using FIG. 9. In the example mentioned above, the AV receiver 100 creates a shared list S in which music titles included in the respective public lists are simply lined up. However, the present embodiment is not limited to this type of example. For example, repetition of music data that is capable of being provided by all of the smartphones that belong to the connection group may be associated with music titles, to create a shared list S. Repetition here indicates the number of smartphones that can provide the same music data.

As a specific example, here is described a case where ten smartphones 301 to 310 are connected to an AV receiver 100. In this example, eight smartphones of these smartphones 301 to 310 can provide (possess) music data of a music title M3. Moreover, one smartphone of these ten smartphones 301 to 310 can provide (possess) music data of a music title M12. Furthermore, in this example, the music title M3 and the music title M12 are included in the public list of each smartphone.

In the example mentioned above, in the shared list S, as shown in FIG. 9, the repetition "8" and the music title M3 are associated with each other. In the shared list S the repetition "1" and the music title M12 are associated with each other. The program of each of the respective smartphones 301 to 310 displays the shared list S shown in FIG. 9. As a result, the users of the respective smartphones 301 to 310 can recognize that most users (eight users) among the ten users can provide the music data of the music title M3, and that there are hardly any user that can provide the music data of the music title M12. Therefore, the users can select contents that is capable of being provided by many users, and can select contents that is capable of being provided by fewer users.

In the example mentioned above, the content reproduction apparatus has been described using the AV receiver that outputs sound signals to external loudspeakers. However, the present embodiment is not limited to this type of example. For example, the content reproduction apparatus may include a loudspeaker. Moreover, the content reproduction apparatus is not limited to an apparatus that is installed in a room, and may be a car audio apparatus that is installed within a vehicle for example. The content reproduction apparatus only needs to be an apparatus that can carry out music contents and video contents, and for example, it may be a television set.

In the example mentioned above, there has been described the case where information that indicates contents is music titles (titles of music contents). However, the present embodiment is not limited to this type of example. Information that indicates contents may be artist names, album titles, music genres, and video content titles.

A program for realizing the functions of each device according to the embodiment mentioned above (such as the AV receiver 100, and the smartphones 301 to 303) may be recorded on a computer-readable recording medium, and this program recorded on a recording medium may be read and executed on a computer system, to thereby perform the processes.

The "computer system" here may include an operating system (OS) and hardware such as peripheral devices.

The "computer-readable recording medium" includes a writable non-volatile memory such as a flexible disk, a magnetic optical disk, a ROM (read-only memory), and a flash memory, a portable medium such as DVD (digital versatile disk), and a memory device such as a hard disk built-in a computer system.

The "computer-readable recording medium" also includes one that retains a program for a certain period of time such as a volatile memory (for example, a DRAM (dynamic random access memory) in a computer system that serves as a server or a client in the case where a program is transmitted via a network such as the Internet or a communication line such as a telephone line.

The above program may be transmitted from a computer system having this program stored in a memory device or the like to another computer system via a transmission medium, or by means of transmission waves in the transmission medium. The "transmission medium" that transmits the program refers to a medium that has a function of transmitting information such as a network (communications network) including the Internet, and a communication circuit (communication line) including a telephone line.

The above program may realize a part of the functions described above.

Also, the program may be a so-called difference file (a difference program) that can realize the functions described above in combination with a program that is already recorded on a computer system.

### INDUSTRIAL APPLICABILITY

The present invention may be applied to a content reproduction apparatus, a content reproduction system, a content information program, and a content reproduction method.

### Reference Symbols

100 AV receiver
200L, 200R Loudspeaker
301, 302, 303 Smartphone
1 CPU
2 Memory
3 DSP
4 HDMI (registered mark)
5 Wireless module
6 AMP
31 Touch panel
32 Display
33 Processor
34 Memory
35 Wireless module

## Claims

1. A content reproduction apparatus comprising:
an information receiving unit that receives first information from a first user terminal capable of providing a first content, the first information including information that indicates the first content, the information receiving unit receiving second information from a second user terminal, the second user terminal being different from the first user terminal and being capable of providing a second content, the second information including information that indicates the second content;
a list transmission unit that transmits a shared list to the first user terminal, the shared list being created based on the first and second information and including third information indicating the first and second contents;
a reproduction request receiving unit that receives, from the first user terminal, a first reproduction request of a first reproduction target content among the first and second contents; and
a reproduction unit that acquires the first reproduction target content from a user terminal capable of providing the first reproduction target content among the first and second user terminals, the reproduction unit reproducing the acquired content.

2. The content reproduction apparatus according to claim 1,
wherein the list transmission unit transmits the shared list to the second user terminal,
the reproduction request receiving unit receives, from the second user terminal, a second reproduction request of a second reproduction target content, and
the reproduction unit acquires the second reproduction target content from a user terminal capable of providing the second reproduction target content among the first and second user terminals.

3. The content reproduction apparatus according to claim 1,
wherein the first reproduction request includes a title of the first reproduction target content, and
the content reproduction apparatus further comprises a reproduction list generation unit that generates a reproduction list based on the first reproduction request, the reproduction list including the title of the first reproduction target content.

4. The content reproduction apparatus according to claim 3,
wherein the reproduction request receiving unit receives, from the first or second user terminal, a second reproduction request of a second reproduction target content among the first and second contents,
the second reproduction request includes a title of the second reproduction target content,
the reproduction list further includes the title of the second reproduction target content, and
the reproduction list generation unit makes a sorting order in the reproduction list of the title of the first reproduction target content and the title of the second reproduction target content, correspond to an order in which the first reproduction request and the second reproduction request are received by the reproduction request receiving unit.

5. The content reproduction apparatus according to claim 1 or 2,
wherein the information that indicates the first content includes a title of the first content,
the information that indicates the second content includes a title of the second content,
the first information further includes first terminal information, the first terminal information indicating the first user terminal,
the second information further includes second terminal information, the second terminal information indicating the second user terminal,
the third information includes the titles of the first and second contents,
the shared list further includes the first terminal information associated with the title of the first content, and the second terminal information associated with the title of the second content, and
the content reproduction apparatus further comprises:
an identification unit that refers to the shared list and identifies a user terminal indicated by terminal information associated with a title of the first reproduction target content; and
a request unit that requests, to the identified user terminal, transmission of the first reproduction target content.

6. The content reproduction apparatus according to any one of claims 1 to 5, further comprising:
an authentication information transmission unit that transmits authentication information;
a connection request receiving unit that receives, from the first user terminal, a connection request as a response to the authentication information; and
a connection establishing unit that transmits a response to the connection request to the first user terminal, and establishes a connection between the first user terminal and the content reproduction device,
wherein the information receiving unit receives the first information after the connection is established, and
the list transmission unit transmits the shared list after the connection is established.

7. The content reproduction apparatus according to claim 1 or 2,
wherein the information that indicates the first content includes a title of the first content,
the information that indicates the second content includes a title of the second content, and
the third information includes the titles of the first and second contents.

8. The content reproduction apparatus according to claim 1 or 2,
wherein the first information includes a first list, the first list indicating the title of the first content,
the second information includes a second list, the second list indicating the title of the second content, and
the content reproduction apparatus further comprises a shared list creation unit that combines the first list and the second list to create the shared list.

9. A content reproduction system comprising: first and second user terminals different from each other; and a content reproduction apparatus,
wherein the first user terminal comprises:
a first information transmission unit that transmits first information to the content reproduction apparatus, the first information including information indicating a first content, the first content being capable of being provided by the first user terminal;
a first list receiving unit that receives a shared list from the content reproduction apparatus, the shared list being created based on the first information and second information, the second information including information indicating a second content, the second content being capable of being provided by the second user terminal, the shared list including third information indicating the first and second contents;
a first reproduction request receiving unit that accepts an operation of selecting a first reproduction target content from the first and second contents; and
a first reproduction request transmission unit that transmits, to the content reproduction apparatus, a first reproduction request of the first reproduction target content,
the second user terminal comprises:
a second information transmission unit that transmits the second information to the content reproduction apparatus, and
the content reproduction apparatus comprises:
an information receiving unit that receives the first information from the first user terminal, and receives the second information from the second user terminal;
a list transmission unit that transmits the shared list to the first user terminal;
a reproduction request receiving unit that receives the first reproduction request from the first user terminal; and
a reproduction unit that acquires the first reproduction target content from a user terminal capable of providing the first reproduction target content among the first and second user terminals, the reproduction unit reproducing the acquired content.

10. The content reproduction system according to claim 9,
wherein the second user terminal further comprises:
a second reproduction request receiving unit that accepts an operation of selecting a second reproduction target content from the first and second contents; and
a second reproduction request transmission unit that transmits, to the content reproduction apparatus, a second reproduction request of the second reproduction target content,
the list transmission unit transmits the shared list to the second user terminal,
the reproduction request receiving unit receives the second reproduction request from the second user terminal, and
the reproduction unit reproduces the second reproduction target content from a user terminal capable of providing the second reproduction target content among the first and second user terminals.

11. The content reproduction system according to claim 9,
wherein the first reproduction request includes a title of the first reproduction target content, and
the content reproduction apparatus further comprises a reproduction list generation unit that generates a reproduction list based on the first reproduction request, the reproduction list including the title of the first reproduction target content.

12. The content reproduction system according to claim 11,
wherein the reproduction request receiving unit receives, from the first or second user terminal, a second reproduction request of a second reproduction target content among the first and second contents;
the second reproduction request includes a title of the second reproduction target content,
the reproduction list further includes the title of the second reproduction target content, and
the reproduction list generation unit makes a sorting order in the reproduction list of the title of the first reproduction target content and the title of the second reproduction target content, correspond to an order in which the first reproduction request and the second reproduction request are received by the reproduction request receiving unit.

13. The content reproduction system according to claim 9 or 10,
wherein the information that indicates the first content includes a title of the first content,
the information that indicates the second content includes a title of the second content,
the first information further includes first terminal information, the first terminal information indicating the first user terminal,
the second information further includes second terminal information, the second terminal information indicating the second user terminal,
the third information includes the titles of the first and second contents,
the shared list further includes the first terminal information associated with the title of the first content, and the second terminal information associated with the title of the second content, and
the content reproduction apparatus further comprises:
an identification unit that refers to the shared list and identifies a user terminal indicated by terminal information associated with a title of the first reproduction target.

14. The content reproduction system according to any one of claims 9 to 13, further comprising:
a permission accepting unit that accepts selection of a content that is permitted to be disclosed to the second user terminal,
wherein the first content is the content that is permitted to be disclosed.

15. The content reproduction system according to any one of claims 9 to 14,
wherein the content reproduction apparatus further comprises:
an authentication information transmission unit that transmits authentication information;
a connection request receiving unit that receives, from the first user terminal, a connection request as a response to the authentication information; and
a connection establishing unit that transmits a response to the connection request to the first user terminal, and establishes a connection between the first user terminal and the content reproduction device,
the information receiving unit receives the first information after the establishment, and
the list transmission unit transmits the shared list after the connection is established.

16. The content reproduction system according to any one of claims 9 to 15,
wherein the first user terminal further comprises:
an authentication information receiving unit that receives authentication information from the content reproduction apparatus;
a connection request transmission unit that transmits, to the content reproduction apparatus, a connection request as a response to the authentication information; and
a connection establishing unit that receives a response to the connection request, and establishes a connection between the first user terminal and the content reproduction device,
the first information receiving unit receives the first information after the connection is established, and
the first list transmission unit receives the shared list after the connection is established.

17. The content reproduction system according to claim 9,
wherein the first user terminal further comprises a display unit that displays titles of the first and second contents, and
the first reproduction request receiving unit receives an operation of selecting the first reproduction target content, in a state where the titles of the first and second contents are displayed by the display unit.

18. A content information program that causes a first user terminal to execute:
transmitting first information to a content reproduction apparatus, the first information including information that indicates a first content, the first content being capable of being provided by the first user terminal;
receiving a shared list from the content reproduction apparatus, the shared list including third information indicating the first and second contents, the shared list being created based on the first information and second information, the second information including information that indicates a second content, the second content being capable of being provided by a second user terminal different from the first user terminal, the shared list including third information including the first and second contents;
accepting an operation of selecting a reproduction target content from the first and second contents; and
transmitting, to the content reproduction apparatus, a reproduction request of the reproduction target content.

19. The content information program according to claim 18, further causing the first user terminal to execute:
accepting selection of a content that is permitted to be disclosed to the second user terminal,
wherein the first content is the content that is permitted to be disclosed.

20. The content information program according to claim 18 or 19, further causing the first user terminal to execute:
receiving authentication information from the content reproduction apparatus;
transmitting, to the content reproduction apparatus, a connection request as a response to the authentication information; and
receiving a response to the connection request, and establishing a connection between the first user terminal and the contents reproduction apparatus,
wherein the first user terminal is transmitted after the connection is established, and
the shared list is received after the connection is established.

21. The content information program according to any one of claim 18 to 20, further causing the first user terminal to execute:
displaying titles of the first and second contents,
wherein an operation of selecting the reproduction target content is received in a state where the titles of the first and second contents are displayed by the first user terminal.

22. A content reproduction method comprising:
receiving first information from a first user terminal capable of providing a first content, the first information including information that indicates the first content;
receiving second information from a second user terminal, the second user terminal being different from the first user terminal and being capable of providing a second content, the second information including information that indicates the second content;
transmitting a shared list to the first user terminal, the shared list being created based on the first and second information and including third information indicating the first and second contents;
receiving, from the first user terminal, a reproduction request of a reproduction target content among the first and second contents;
acquiring the reproduction target content from a user terminal capable of providing the reproduction target content among the first and second user terminals; and
reproducing the acquired content.
